# EUROPEAN PATENT SPECIFICATION

(11) **EP 3 973 829 B1**
(45) Date of publication and mention of the grant of the patent: **04.12.2024**
(21) Application number: 21020468.1
(22) Date of filing: 20.09.2021
(51) Int. Cl.: A47J 47/14, A47J 39/00

(54) **MEAL DISTRIBUTION TRAY, SYSTEM CONSISTING OF SUCH A TRAY AND OF A TROLLEY WHEREIN THE TRAY IS TO BE TO INSERTED FOR TRANSPORTING AND DISTRIBUTING MEALS**
MAHLZEITENVERTEILUNGSTABLETT, SYSTEM BESTEHEND AUS EINEM SOLCHEN TABLETT UND EINEM WAGEN, IN DEM DAS TABLETT ZUM TRANSPORTIEREN UND VERTEILEN VON MAHLZEITEN EINGESETZT WERDEN SOLL
PLATEAU DE DISTRIBUTION DE REPAS, SYSTÈME COMPOSÉ D'UN TEL PLATEAU ET D'UN CHARIOT DANS LEQUEL LE PLATEAU DOIT ÊTRE INSÉRÉ POUR TRANSPORTER ET DISTRIBUER DES REPAS

(30) Priority: 23.09.2020 IT 202000022393
(43) Date of publication of application: 30.03.2022
(73) Proprietor: Burlodge Ltd, Chessington, Surrey KT9 2NY (GB)
(72) Inventor: Speranza, Angelo, Chessington, Surrey KT9 2NY (GB); Rivola, Marco, 24068 Seriate (BG) (IT)
(74) Representative: Contessini, Pier Carlo

(56) References cited:
- EP-A1- 1 518 487
- DE-B3- 102009 051 162
- JP-A- 2014 064 670
- JP-A- 2015 036 085
- US-A- 1 655 735
- US-A- 3 222 114

## Description

### Field of the Invention

The present invention refers to a tray; in particular, the present invention refers to a tray for distributing meals and to a system comprising such a tray and a trolley wherein the tray is to be inserted for transporting and distributing meals.

### State of the art.

Within communities such as hospitals, nursing homes, schools, etc., the meals to be served to users are typically transported by means of special trolleys wherein the trays containing the meals are inserted.

Meals are portioned onto an individual and personalized tray (often associated with a menu or a specific diet) and are placed in special trolleys divided into at least two compartments separated and insulated from the external environment and from each other, as they are typically at different temperatures (neutral, hot, cold, etc. compartments).

The element separating the compartments typically consists of an insulated brick equipped with shutters or closing gaskets in order to be able to seal the compartments both in the absence of the tray and in the presence of the tray. This insulated dividing element, therefore thanks to the damper or gasket, is substantially equipped with a bulkhead which, in addition to allowing the insertion of the tray, always allows the spaces to be sealed, eliminating drafts between the compartments at different temperatures, both in the presence and in the absence of the tray.

Typically, a special tray consists of a single element ("monoblock") which fits over two insulated compartments and is laterally supported by usually metal supports. For example, the tray can contain, in its first portion, the foods that must be heated and, in its second portion, the foods that must be kept cold.

The presence of this bulkhead on the divider, which has undergone profound revolutions over the years, is a critical and binding element for the shape of the tray that must be inserted between the insulated dividers, while sealing the section straddling the compartments at different temperatures.

Known in the art trays have an edge interruption substantially at the central portion of the tray long side, in order to exploit this interruption to easily insert the tray between the dividers of the trolley.

For example, the European patent application published with No. EP 1,518,487 A1 describes a tray provided with a flat bottom and a raised peripheral edge; the latter does not cover the entire periphery of the flat bottom as it is interrupted in two planar areas located opposite each other along two opposite sides of the tray, configured to allow the tray to be positioned into the trolley, while preserving thermal insulation.

However, this edge interruption at these planar regions constitutes a problem since it prevents any liquids accidentally spilled onto it from being retained onto the tray. Furthermore, the interruption typically limits the possibility of translating the tray, making it not particularly versatile if there is a need to increase/decrease the useful tray spaces between the compartments.

Furthermore, an interrupted edge constitutes an overall structural weakness of the tray itself.

Solutions have also been adopted having a divider in the trolley with double gasket or double shutter (one above the divider and the other one below it); however the presence of a gasket (or shutter) above the divider (the one that would seal the underside of the tray) presents the problem that it constitutes an easy receptacle for dirt and food residues.

Furthermore, Japanese patent application N. JP2015036085 A discloses a tray according to the preamble of claim 1 and a food service vehicle for transporting a plurality of trays each including a flat plate portion having a rectangular shape in a plan view, and an enclosing edge erected from the outer peripheral edge of the flat plate portion and surrounding the entire circumference of the flat plate portion. The surrounding edge is an inclined surface extending outward toward the upper side, and a flange portion protruding outward is formed on an upper end edge of the surrounding edge over the entire circumference

Therefore, the Applicant of this patent application has found the need to provide a tray to be inserted in a trolley for the distribution of meals that solves the aforementioned technical problems present in such known in the art trays.

### Summary of the invention

In a first aspect, the present invention refers to a tray for distributing meals such as the one indicated in claim 1.

The presence of a continuous perimeter edge around the support base of the tray allows to contain any liquids accidentally spilled onto the tray, a problem instead present in some known in the art trays presenting at least a discontinuity in the perimeter edge in order to render easier the tray insertion in the trolleys for the meals distribution. Furthermore, the presence of a continuous perimeter edge also constitutes a structural tray reinforcement, as opposed to a tray having an interrupted perimeter edge.

In addition, thanks to the fact that at least one of said portions of said continuous perimeter edge in relief has a lower base that is coplanar and coincides with said bottom of the tray, it allows the tray of the present invention to close completely on the lower divider of the trolley, once that the tray is inserted into the cart itself.

In fact, the planar bottom of the tray allows the tray itself to rest onto the divider without gasket (or shutter) without having drafts and without having to adapt to particular shapes of the divider of the trolley. In this way, the divider in its upper part can be smooth, without gaskets (or shutters) and hygienic. In the lower part it will instead have a gasket or a damper.

Furthermore, the fact that the portion of the continuous perimeter edge is inclined allows the raised end of the portion of said edge to be connected with said support base, thus also facilitating the insertion into / extraction from the trolley especially in those of recent design or those equipped with partitions integral with the trolley and equipped with gaskets (or shutters).

According to the invention, the height of said at least one portion of said continuous perimeter edge is less than the remaining portion of said continuous perimeter edge in relief.

According to a preferred embodiment of the present invention, both said first portion and said second portion of said continuous perimeter edge in relief have a lower base coplanar and coincident with said bottom and an inclined upper surface in order to connect the raised end of the portion of said edge with said support base.

In this way, the tray is provided with two of said inclined portions arranged opposite each other, at the central areas of the two sides of the tray. In this way the tray can be inserted into the trolley without giving any preference to which longitudinal side of the tray is to be inserted first. However, it is also possible to have only a inclined portion.

According to a preferred embodiment of the present invention, said upper surface of said at least a portion of said continuous perimeter edge in relief is inclined towards the inside of the tray.

According to a preferred embodiment of the present invention, said at least a portion of said continuous perimeter edge has a substantially triangular section.

In this way, the substantially triangular section further facilitates the insertion of the tray into the trolley.

According to an alternative embodiment of the present invention, said at least a portion of said continuous perimeter edge has a substantially trapezoidal or oval section, otherwise connected, inclined or radiated.

According to a preferred embodiment of the present invention, said at least a portion of said continuous peripheral edge having a substantially triangular section has a solid section.

In this way, the full triangular section allows drafts between the hot and cold compartments to be avoided.

According to a preferred embodiment of the present invention, said at least a portion of said continuous perimeter edge has a hollow section and has a plurality of ribs arranged in the part of the tray below said inclined upper surface.

In this way, in order to meet known molding technologies which may encounter difficulties of consistent solid thicknesses, the edge section can be emptied and provided with ribs which in any case allow to create a separation wall straddling the divider and to close the drafts in the same way as the full section.

According to a preferred embodiment of the present invention, said tray is substantially rectangular in shape, while not excluding the possibility of any other shape (square, oval, etc.).

According to a preferred embodiment of the present invention, said tray consists of a single area suitable for housing meals and their containers.

Having a single area, there is the advantage over double areas trays to avoid the presence of an intermediate rib which can separate the two areas.

Moreover, thanks to the fact that the tray of the present invention is provided with a continuous perimeter edge arranged around said support base and is provided with a single area suitable for housing meals, it has the possibility of almost unlimitedly translating to the right or to the left once inserted into the trolley, in order to increase or decrease the surface available in the compartments of the trolley from time to time according to the needs. A versatility and flexibility of use is thus allowed according to the patient's menu or according to the type of meal (breakfast, lunch, or dinner), which is very limited in the known in the art trays provided with interrupted edge either with a double area or with a single area suitable for housing meals.

According to a preferred embodiment, the tray of the present invention further comprises at least a gripping portion of said continuous perimeter edge provided with a first surface facing upwards and a second surface facing downwards, wherein said first and second surface of said grip portion are shaped in such a way that they can be used as a grip to hold the tray.

In this way, the user grip is facilitated to lift and move the tray.

According to a preferred embodiment, the tray of the present invention comprises a first gripping portion arranged at the central part of said continuous perimeter edge along a first transverse tray side and a second gripping portion arranged at the central part of said continuous perimeter edge along the second transverse tray side opposite to said first transverse tray side.

In this way, the grips arranged along the side edges further facilitate the tray lifting and moving.

According to a preferred embodiment of the present invention, said second surface facing downwards of said at least one gripping portion is provided with a plurality of grooves or ribs, placed adjacent to each other.

In this way, considering that the tray that is handled at the end of a heating cycle in the trolley is usually hot and can burn, the presence of grooves or ribs under the sockets allows less contact with the skin of the hands and less sensation of warmth upon setting.

According to a preferred embodiment of the present invention, said tray is made from a mold of plastic material and is capable of withstanding the temperatures involved in the heating/cooling cycles while maintaining its flatness.

According to a preferred embodiment of the present invention, the conformation of the tray of the present invention allows the trays to be stacked on top of each other.

In this way it is possible to create a compact, vertical and stable stack, while leaving a gap between them to allow natural drying.

In a second aspect, the present invention refers to a system such as that one indicated in claim 12 comprising a tray and a trolley wherein the tray is to be to inserted for transporting and distributing meals.

The Applicant of the present application has in fact surprisingly found that the technical problem encountered above can be solved effectively and reliably by means of a system comprising: a) a tray as described above with reference to the first aspect of the present invention, and b) a trolley wherein the tray is to be to inserted for transporting and distributing meals, wherein said trolley is equipped with at least two separate compartments insulated from the external environment and from each other, as typically at different temperatures (neutral, hot, cold compartments, etc...), and wherein the trolley is also provided with a separation element for separating the compartments, wherein said separation element comprises an insulated element, such as for example a brick, equipped with shutters or closing gaskets in order to be able to seal said at least two compartments.

In this way, the tray described above is particularly suitable for being inserted and transported in this type of trolley, equipped with an element for separating the compartments.

In a third aspect, the present invention refers to the use of a tray for transporting meals in a trolley as indicated in claim 13.

The Applicant of the present application has in fact surprisingly found that the technical problem encountered above can be solved in an effective and reliable way by using a tray as described above with reference to the first aspect of the present invention for transporting meals in a trolley, wherein said trolley is provided with at least two separate compartments insulated from the external environment and from each other, as typically at different temperatures (neutral, hot, cold compartments, etc.) and wherein the trolley is also provided with a separation element for separating the compartments, wherein said separation element comprises an insulated element, such as for example a brick, equipped with shutters or closing gaskets in order to be able to seal said at least two compartments.

In this way, the tray described above is particularly suitable for use in the distribution of meals as it is well suited to be inserted and transported in this type of trolley, equipped with an element for separating the compartments.

In a fourth aspect, the present invention refers to the method for transporting meals in a trolley as indicated in claim 14.

The Applicant of the present application has in fact surprisingly found that the technical problem encountered above can be solved in an effective and reliable way by inserting a tray, as described above with reference to the first aspect of the present invention, and having a meal thereon, into a trolley and transporting, wherein said trolley is provided with at least two compartments separated and insulated from the external environment and from each other, as typically at different temperatures (neutral, hot, cold compartments, etc.) and wherein the trolley is also provided with a separation element for separating the compartments, wherein said separation element includes an insulated element equipped with shutters or closing gaskets so as to be able to seal said at least two compartments.

Further features and advantages of the present invention will be better highlighted by examining the following detailed description of a preferred but not exclusive embodiment, illustrated by way of non-limiting indication, with the support of the attached drawings, wherein:
- Figure 1 is a perspective view of an embodiment of the tray of the present invention;
- Figure 2 is a side view of the tray of Figure 1;
- Figure 3 is a detail of the inclined portion of the edge of the tray of Figures 1 and 2;
- Figure 4 shows a detail of the tray of Figure 1, seen from below;
- Figure 5 is a further detail of the tray of Figure 1, seen from below;
- Figure 6 is a detail of a second embodiment of the tray of the present invention, seen from below, where the ribs placed in correspondence with the inclined portions are visible;
- Figure 7 is a detail of Figure 6, seen from below, where the ribs placed in correspondence with the inclined portions are more visible;
- Figure 8 is a further detail of Figure 6, where some ribs placed in correspondence with the inclined portions are visible;
- Figure 9 is a detail of a gripping portion of the tray of Figure 1;
- Figure 10 is a detail of the gripping portion of Figure 9, seen from below, where the ribs located in correspondence with the gripping portion are visible;
- Figure 11 is a perspective view of a trolley used in the present invention;
- Figure 12 is a front view of the trolley of Figure 11;
- Figure 13 is a perspective view of a tray of the present invention partially inserted in the trolley of Figure 11;
- Figure 14 is a perspective view of a tray of the present invention completely inserted in the trolley of Figure 11 in a symmetrical way with respect to the divider present in the trolley,
- Figure 15 is a perspective view of a tray of the present invention completely inserted in the trolley of Figure 11 asymmetrically with respect to the fixed divider of the trolley.

### DETAILED DESCRIPTION.

The following detailed description refers to particular embodiments of a tray of the present invention.

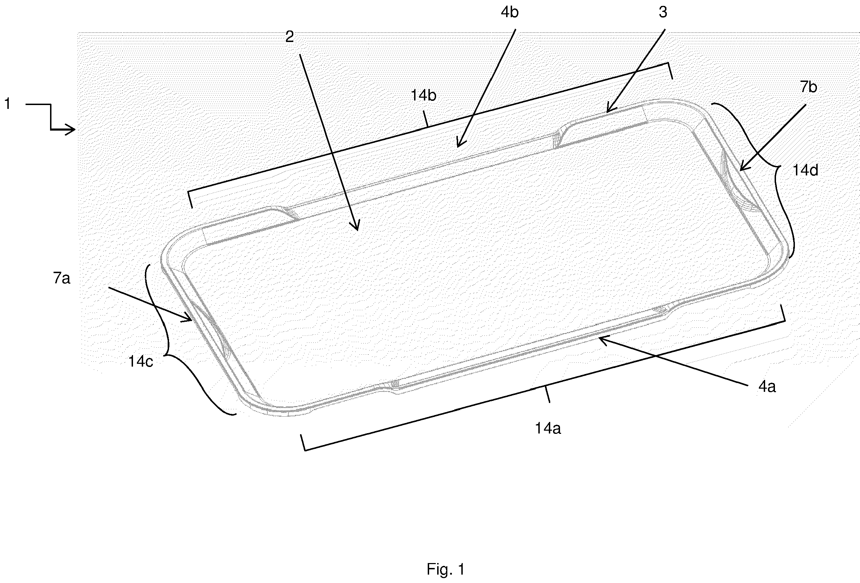

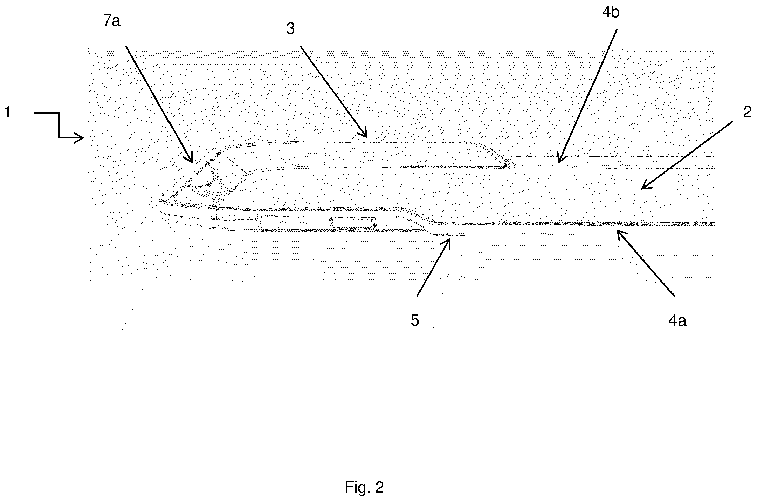

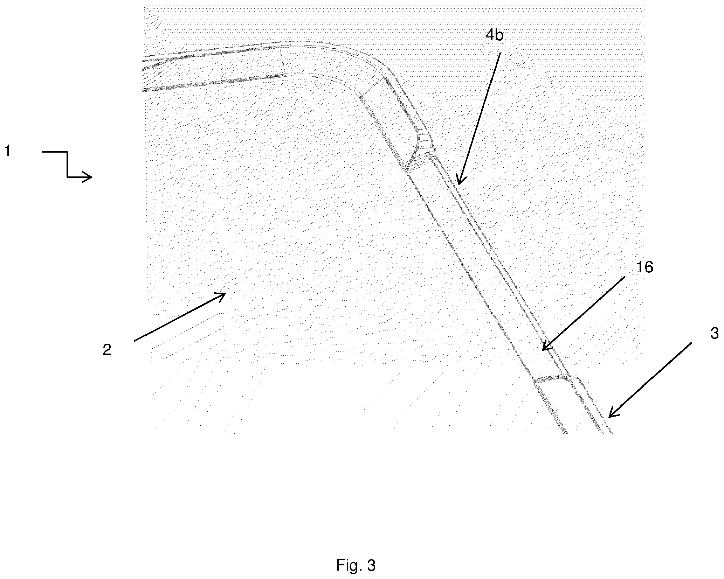

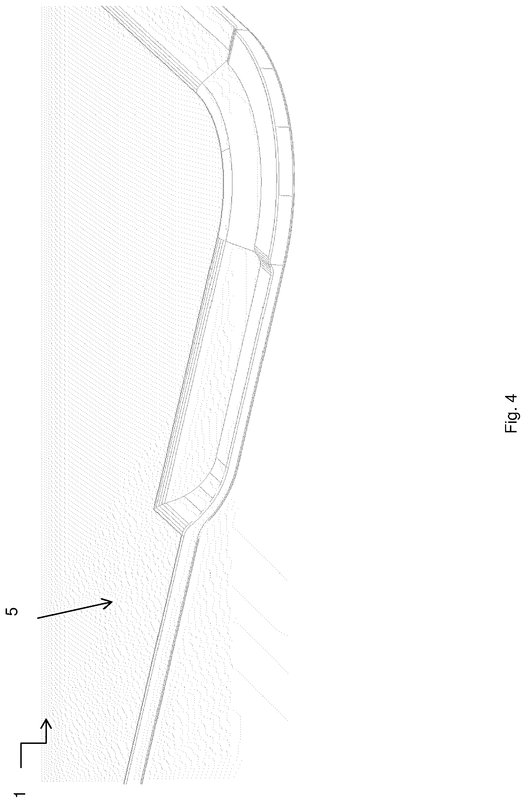

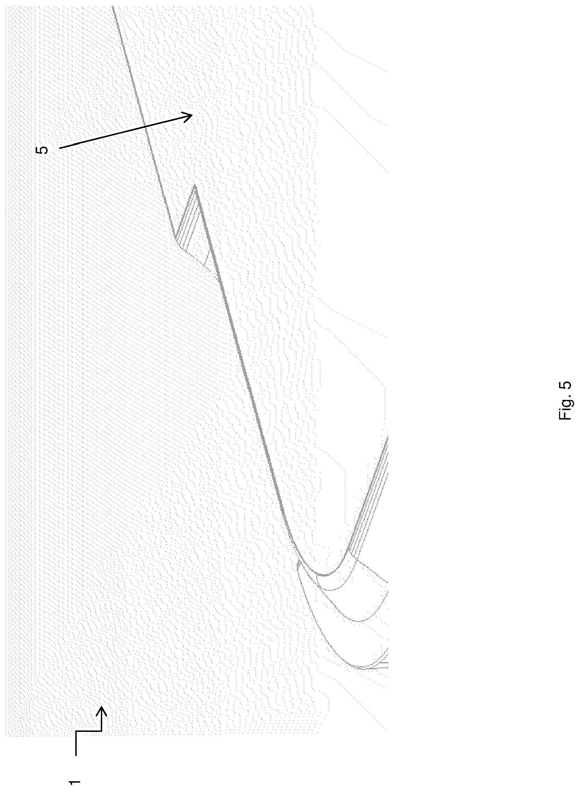

With particular reference to Figures 1-5, a first embodiment of a tray 1 of the present invention for the distribution of meals is described.

The rectangular tray 1 with a single area suitable for housing meals is equipped with: a) a support base 2, facing upwards and suitable for housing meals, b) a bottom 5 facing downwards and able to rest on a flat surface, and c) a continuous perimeter edge 3, arranged in relief around the support base 2.

The edge 3 comprises a first portion 4a, arranged at the central part along a first longitudinal side 14a of the tray 1, and a second portion 4b arranged at the central part along a second longitudinal side 14b of the tray 1, opposite the first side longitudinal 14a. The two portions 4a, 4b of the continuous raised edge 3 therefore occupy the central portions of the two opposite longitudinal sides 14a, 14b of the tray 1.

Each of the two portions 4a, 4b of the continuous perimeter edge in relief 3 has a lower base, coplanar and coinciding with the bottom 5, and an upper surface 16, inclined towards the inside of the tray 1, in order to connect the end in relief of the portions 4a, 4b of the edge 3 with the support base 2.

These portions 4a, 4b of the continuous perimeter edge in relief 3 have a substantially triangular section, even if in other alternative embodiments they can have different shapes, such as for example trapezoidal, oval, differently connected, inclined or radiated. The height of the two portions 4a, 4b is reduced with respect to the height of the remaining portion of the continuous perimeter edge 3.

The portions 4a, 4b of the continuous perimeter edge 3 have a solid section; this avoids drafts of air between the hot and cold compartments of the tray 1.

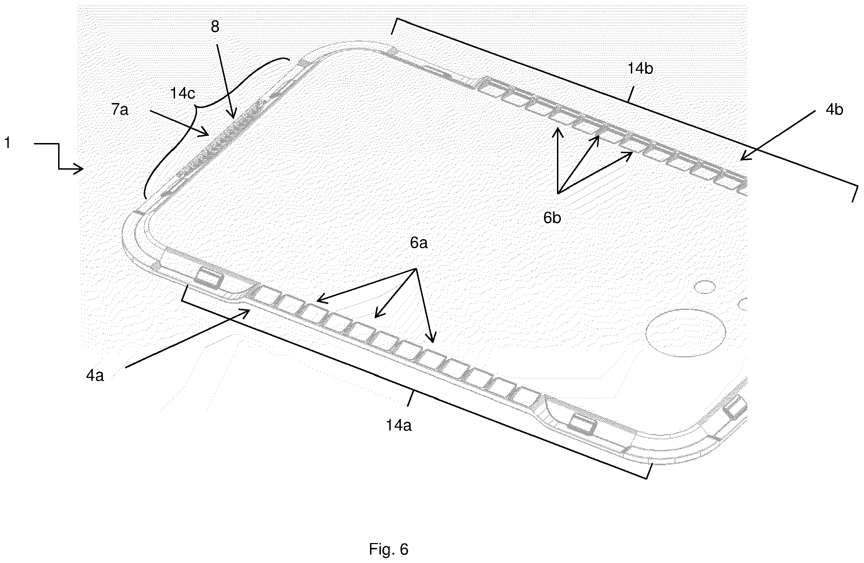

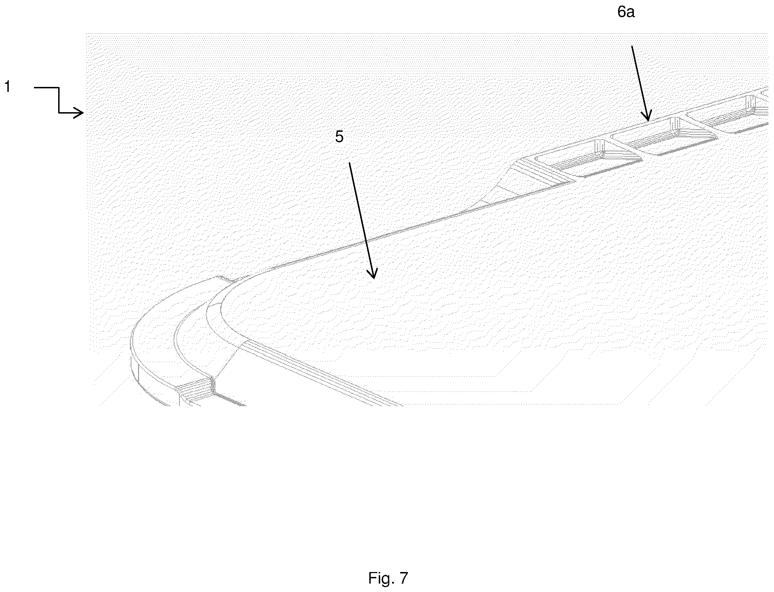

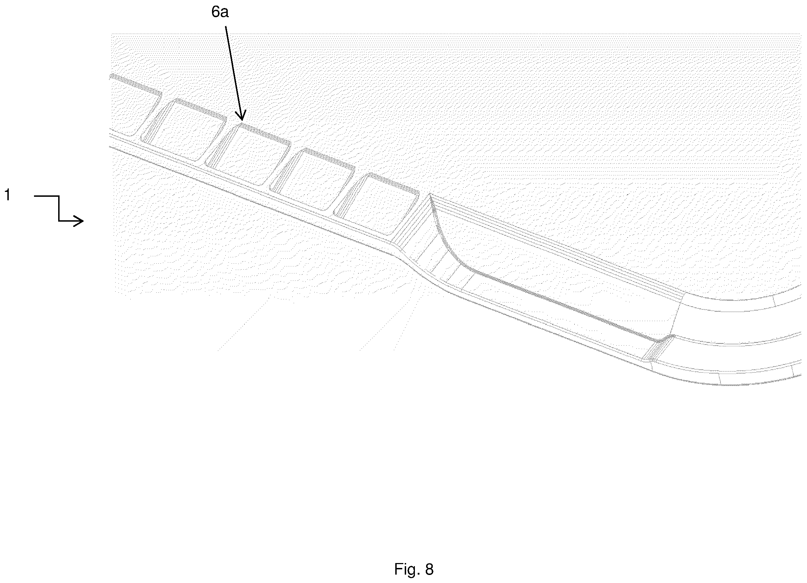

With particular reference to Figures 6-8, a second embodiment of a tray 1 of the present invention for distributing meals is described, wherein the portions 4a, 4b of the continuous perimeter edge 3 are hollow, instead of having a solid section, as shown above in the first embodiment with reference to Figures 1-5.

Figures 6-8 show the tray 1 seen from below; the plurality of ribs 6a located in correspondence with the triangular section portion 4a of the continuous perimeter edge 3, along the longitudinal side 14a of the tray 1, are visible; similarly, the plurality of ribs 6b located in correspondence with the triangular section portion 4b of the continuous perimeter edge 3, along the longitudinal side 14b opposite of the tray 1, are visible. These ribs 6a, 6b are arranged in the part of the tray 1 below the upper surface inclined 16 of the portions 4a, 4b. They allow the section of the edge 3 to be emptied to make it easier to mold the tray 1 in the production phase, while at the same time achieving the purpose of creating a separation wall straddling the divider in the trolley and closing the air drafts between the hot and cold compartments.

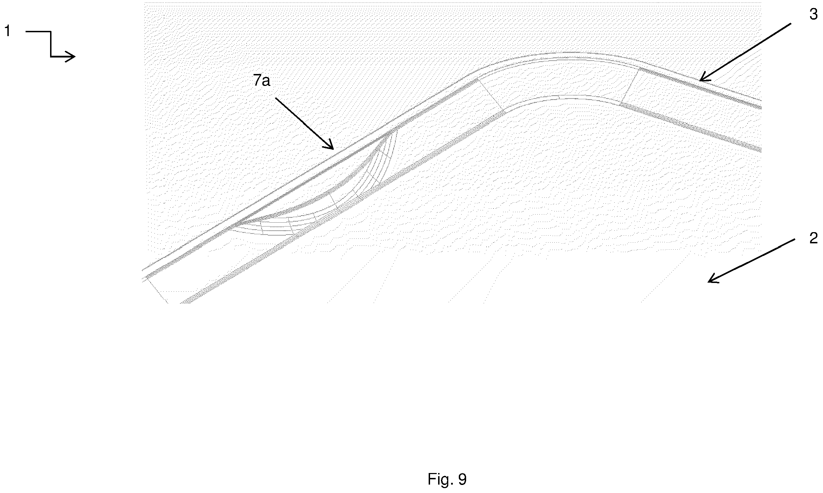

The tray 1 (both the one relating to the first embodiment shown in Figures 1-5, and the one relating to the second embodiment shown in Figures 6-8) is also provided with a gripping portion 7a arranged along the continuous perimeter edge 3 in the transverse side 14c of the tray 1 and of a similar gripping portion 7b arranged along the continuous perimeter edge 3 in the opposite transverse side 14d of the tray 1 (visible in general in Figures 1 and the gripping portion 7a in particular in Figures 6, 9 and 10). Each of the gripping portions 7a, 7b is provided with a first surface facing upwards and a second surface facing downwards, shaped in such a way that they can be used by the user as a grip for lifting and holding the tray by the hands.

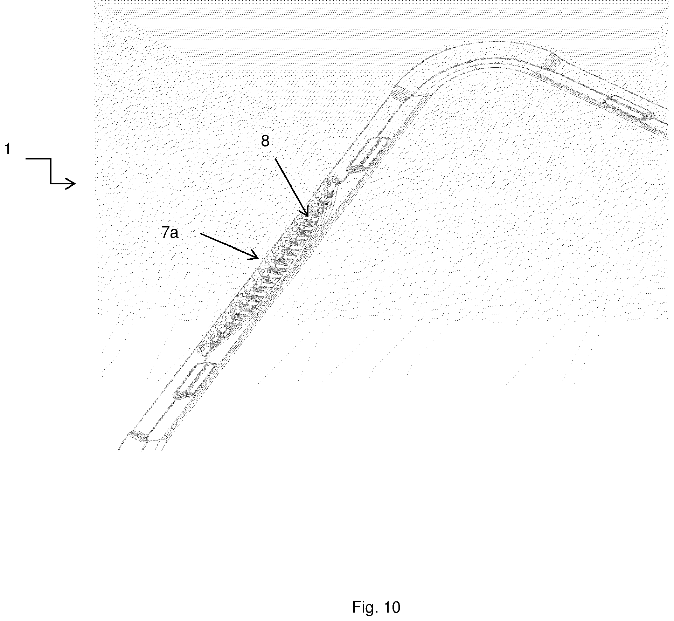

With particular reference to Figure 10, the tray 1 is shown seen from below; the plurality of recesses 8 placed adjacent to each other on the second surface facing downwards of the gripping portion 7a are visible.

These recesses 8 allow less contact by the user with the tray and a lower heat sensation at the time of gripping, considering that the tray is typically subjected to a heating cycle in the trolley and is therefore usually hot and can burn.

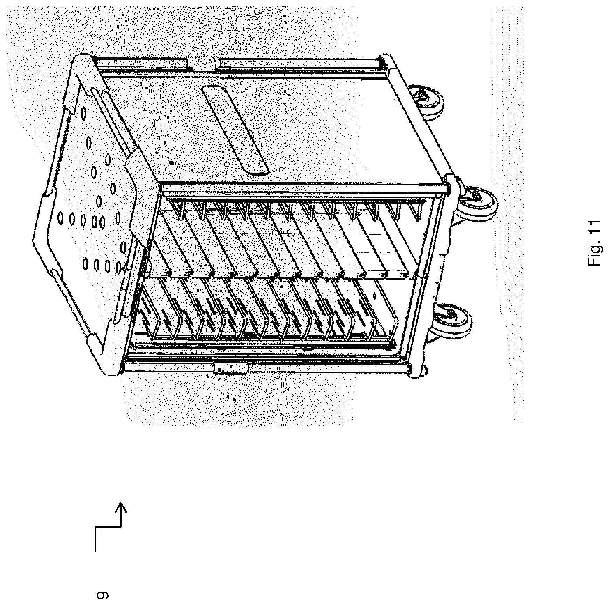

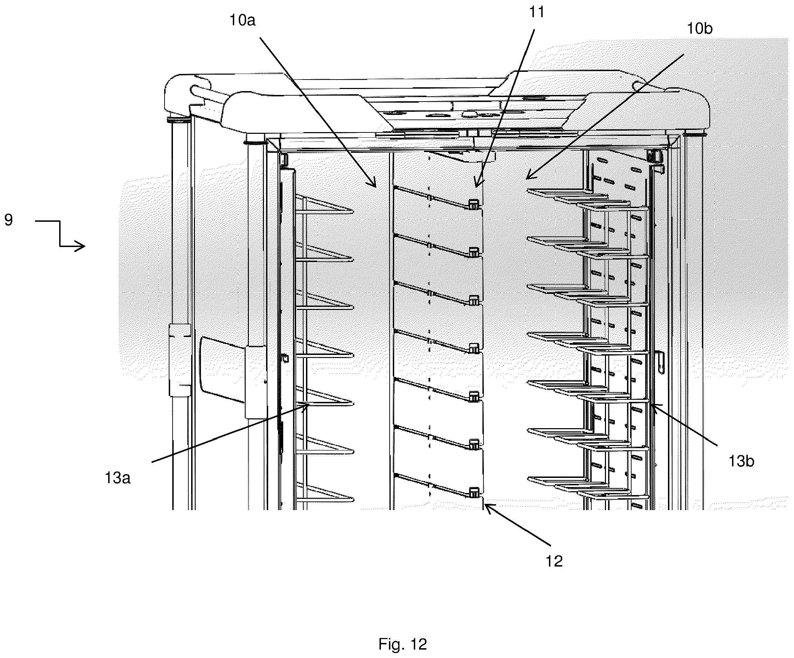

The tray 1 described above is used to serve meals to users in communities such as hospitals, retirement homes, schools, etc., and for this purpose it is inserted into a special trolley 9, shown in Figures 11 and 12, used for the transport of such trays.

The trolley 9 is divided into at least two compartments 10a, 10b separated and insulated from the external environment and from each other, as they are typically at different temperatures (neutral, hot, cold compartments, etc.).

The trolley 9 is provided with a separation element 11 that separates the compartments 10a, 10b, consisting of an insulated brick 12 equipped with shutters or closing gaskets so as to be able to seal the compartments 10a, 10b both in the case of absence and presence of tray 1. This insulated brick 12, therefore thanks to the shutter or gasket, is substantially equipped with a bulkhead which, in addition to allowing the insertion of the tray 1, always allows the spaces to be sealed, eliminating drafts between the compartments 10a, 10b at a different temperature, both in the presence and absence of tray 1.

The trolley 9 is also provided with a plurality of pairs of support elements 13a and 13b, symmetrically arranged with respect to a corresponding brick 12 and on its same plane, on each of which rests a tray 1 for transport. Trays 1 are thus stacked one on top of the other inside the trolley 9.

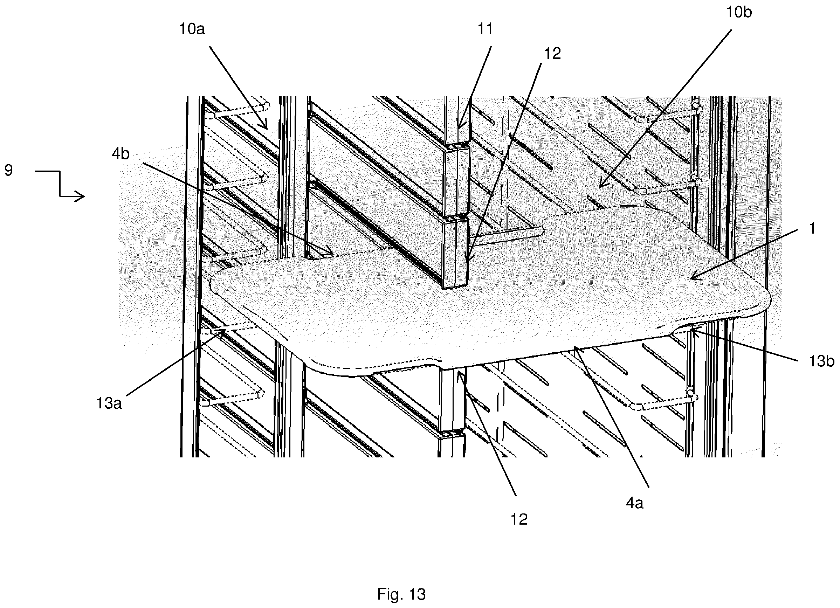

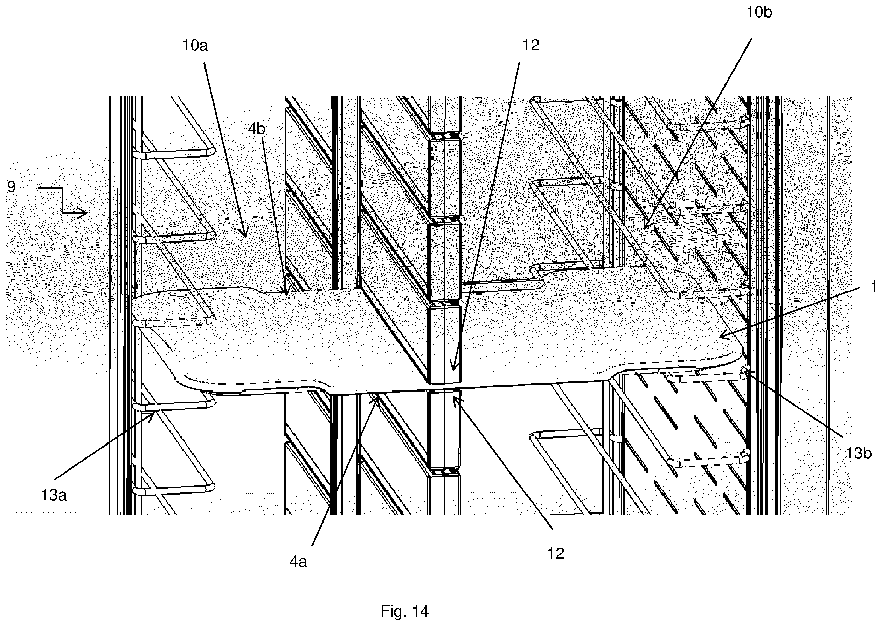

Figure 13 shows a tray 1 partially inserted in the trolley 9, while Figure 14 shows the tray 1 completely inserted in the trolley 9, symmetrically with respect to the separation element 11.

The tray 1 of Figures 13 and 14 rests on the support element 13a on one side and on the support element 13b on the other side (only partially visible in Figure 13 as it is covered by the tray 1 itself) and on the insulated brick 12 located underneath the tray 1.

Thanks to the inclined upper surface 16 of the portion 4b of the continuous raised edge 3 of the tray 1, the insertion of the tray 1 itself in the free space between two dividing bricks 12 superimposed one another is facilitated.

Furthermore, thanks to the fact that at least one of the portions 4a, 4b of the continuous perimeter edge 3 in relief has a lower base that is coplanar and coincides with the bottom 5 of the tray 1, the tray of the present invention is allowed to be completely closed onto the lower divider 12 of the trolley 9, once the tray is inserted into the trolley 9 itself.

In fact, the bottom 5 of the tray 1 allows the tray 1 to rest on the divider 12 without the gasket (or shutter) without having drafts and without having to adapt to particular shapes of the divider of the trolley 9. In this way, the divider in its upper part can be smooth, without gaskets (or shutters) and hygienic. In the lower part it will instead have a gasket or a damper.

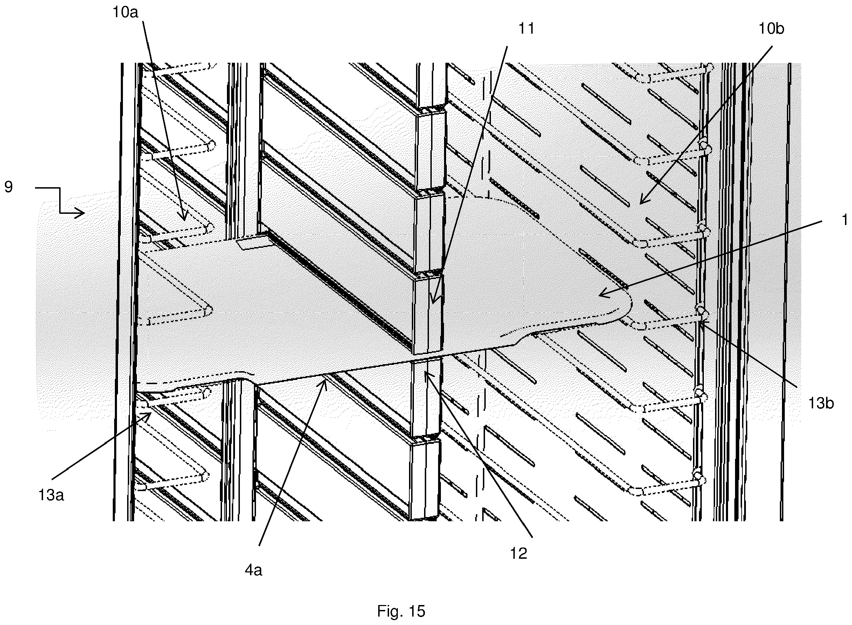

Figure 15 shows the tray 1 completely inserted in the trolley 9, asymmetrically with respect to the partition 11. Therefore, thanks to the fact that the tray 1 of the present invention is provided with a continuous perimeter edge 3 arranged around the support base 2 and is provided with a single area suitable for housing meals, it has the possibility of translating almost unlimitedly to the right or to the left with respect to the dividing brick 12 once inserted into the trolley 9, in order to increase or decrease the surface from time to time according to the needs available in the compartments 10a, 10b of the trolley 9. This allows a versatility and flexibility of use according to the patient's menu or according to the type of meal (breakfast, lunch, or dinner), which is very limited in the known in the art trays provided with a single or double area suitable for housing meals with interrupted edge.

Of course, many modifications and variations of the described preferred embodiments will be apparent to those skilled in the art, still remaining within the scope of the invention, which is defined by the claims.

For example, in the previous description, reference has always been made to a tray with a single area suitable for housing meals, but other embodiments of the tray of the present invention can provide trays with multiple areas suitable for housing meals.

Furthermore, in the previous description, reference has always been made to a tray provided with two grip portions arranged along the opposite transverse sides of the tray, but other embodiments of the tray of the present invention can provide trays provided with grip portions arranged in other points along the continuous perimeter edge of the tray, as well as other embodiments can provide trays provided with a single grip portion. Finally, in the previous description, reference has always been made to a tray provided with two inclined portions arranged centrally along the opposite longitudinal sides of the tray, but other embodiments of the tray of the present invention can provide trays provided with only one inclined portion.

Therefore, the present invention is not limited to the preferred embodiments described, illustrated only by way of non-limiting example, but is defined by the following claims.

## Claims

1. Tray (1) for distributing meals comprising: a) a support base (2) facing upwards and suitable for housing said meals, b) a bottom (5) facing downwards and suitable for resting on a flat surface, and c) a continuous perimeter edge (3) arranged around said support base (2) and in relief with respect to it, wherein said edge (3) comprises a first portion (4a) arranged at the central part along a first longitudinal side (14a) of the tray (1) and a second portion (4b) arranged at the central part along a second longitudinal side (14b) of the tray (1), opposite to said first longitudinal side (14a), at least one of said first and second portions (4a, 4b) of said continuous perimeter edge in relief (3) has a lower base that is coplanar and coincides with said bottom (5) of the tray (1) and an upper surface (16) inclined in order to connect the raised end of said at least one portion (4a, 4b) of said edge (3) with said support base (2),
**characterized in that** the height of said at least one portion (4a, 4b) of said continuous perimeter edge (3) is less than the remaining portion of said continuous perimeter edge in relief (3).

2. Tray (1) according to claim 1 wherein said upper surface (16) of said at least one portion (4a, 4b) of said continuous perimeter edge (3) in relief is inclined towards the inside of the tray (1).

3. Tray (1) according to any of claims 1-2 wherein said at least one portion (4a, 4b) of said continuous perimeter edge (3) has a substantially triangular section.

4. Tray (1) according to any of claims 1-2 wherein said at least one portion (4a, 4b) of said continuous perimeter edge (3) has a substantially trapezoidal or oval section.

5. Tray (1) according to any of claims 1-4 wherein said at least one portion (4a, 4b) of said continuous perimeter edge (3) has a solid section.

6. Tray (1) according to any of claims 1-4 wherein said at least one portion (4a, 4b) of said continuous perimeter edge (3) has a hollow section and has a plurality of ribs (6a, 6b) arranged in the part of the tray below said inclined upper surface. (16).

7. Tray (1) according to any one of the preceding claims, wherein said tray is substantially rectangular in shape.

8. Tray (1) according to any one of the preceding claims, wherein said tray comprises a single area suitable for housing meals.

9. Tray (1) according to any one of the preceding claims further comprising at least a gripping portion (7a, 7b) of said continuous perimeter edge (3) provided with a first surface facing upwards and a second surface facing towards the bottom, wherein said first and second surfaces of said grip portion (7a, 7b) are shaped in such a way that they can be used by the user as a grip to hold the tray, and wherein said second surface facing downwards of said at least one gripping portion (7a, 7b) is provided with a plurality of recesses (8), placed adjacent to each other.

10. Tray (1) according to any one of the preceding claims being stackable on top of another tray (1) in an orderly manner, in order to create a compact, vertical and stable stack.

11. System comprising: a) a tray (1) according to any one of the preceding claims 1-10 and b) a trolley (9) wherein the tray (1) is to be inserted for transporting and distributing meals, wherein said trolley (9) is provided with at least two compartments (10a, 10b) separated and insulated from the external environment and from each other as well, as typically at different temperatures for example neutral, hot or cold compartments, and wherein the trolley (9) is also provided with a separation element (11) for separating said compartments (10a, 10b), wherein said separation element (11) comprises an insulated element (12) equipped with shutters or sealing gaskets in order to be able to sealing said at least two compartments (10a, 10b).

12. Use of a tray (1) according to any one of the preceding claims 1-10 for transporting meals in a trolley (9), wherein said trolley (9) is provided with at least two compartments (10a, 10b) separated and insulated from the external environment and from each other as well, as typically at different temperatures for example neutral, hot or cold compartments, and wherein the trolley (9) is also provided with a separation element (11) for separating said compartments (10a, 10b), wherein said separation element (11) comprises an insulated element (12) equipped with shutters or closing gaskets so as to be able to seal said at least two compartments (10a, 10b).

13. A method for transporting meals in a trolley (9), comprising inserting the tray (1) according to any one of the preceding claims 1-10, having a meal thereon, into a trolley (9), and transporting, wherein said trolley (9) is provided with at least two compartments (10a, 10b) separated and insulated from the external environment and from each other as well, as typically at different temperatures, for example neutral, hot or cold compartments, and wherein the trolley (9) is also provided with a separation element (11) for separating said compartments (10a, 10b), wherein said separation element (11) comprises an insulated element (12) equipped with shutters or closing gaskets so as to be able to seal said at least two compartments (10a, 10b).

## Patentansprüche

1. Tablett (1) zum Verteilen von Mahlzeiten, das folgendes umfasst: a) eine Stützbasis (2), die nach oben zeigt und die geeignet ist, um besagte Mahlzeiten aufzunehmen, b) einen Boden (5), der nach untern zeigt und geeignet ist, auf einer flachen Oberfläche aufzuliegen und c) eine kontinuierliche Umrandung (3), die um besagte Stützbasis (2) herum und in Bezug auf sie erhaben angeordnet ist, wobei besagte Umrandung (3) einen ersten (4a) Teilbereich, der im mittleren Bereich entlang einer ersten Längsseite (14a) des Tabletts (1) angeordnet ist und einen zweiten Teilbereich (4b), der im mittleren Bereich entlang einer zweiten Längsseite (14b) des Tabletts (1) angeordnet ist, umfasst, und zwar gegenüber der besagten ersten Längsseite (14a), wobei mindestens einer der besagten ersten oder zweiten Teilbereiche (4a, 4b) der besagten kontinuierlichen erhabenen Umrandung (3) eine untere Basis, die koplanar ist und mit dem Boden (5) des Tabletts (1) zusammenfällt und eine obere Oberfläche (16), die geneigt ist, um das erhöhte Ende des besagten mindestens einen Teilbereichs (4a, 4b) der besagten Umrandung (3) mit besagter Stützbasis (2) zu verbinden, hat
dadurch ausgezeichnet, dass die Höhe des besagten mindestens einen Teilbereich (4a, 4b) der besagten kontinuierlichen Umrandung (3) geringer als der verbleibende Teilbereich der kontinuierlichen erhabenen Umrandung (3) ist.

2. Tablett (1) gemäß Anspruch 1, wobei besagte obere Oberfläche (16) des besagten mindestens einen Teilbereich (4a, 4b) der besagten kontinuierlichen erhabenen Umrandung (3) zur Innenseite des Tabletts (1) geneigt ist.

3. Tablett (1) gemäß einem der Ansprüche 1-2, wobei besagter mindestens ein Teilbereich (4a, 4b) der besagten kontinuierlichen Umrandung (3) im Wesentlichen einen dreieckigen Abschnitt hat.

4. Tablett (1) gemäß einem der Ansprüche 1-2, wobei besagter mindestens ein Teilbereich (4a, 4b) der besagten kontinuierlichen Umrandung (3) im Wesentlichen einen trapezförmigen oder ovalen Abschnitt hat.

5. Tablett (1) gemäß einem der Ansprüche 1-4, wobei besagter mindestens ein Teilbereich (4a, 4b) der besagten kontinuierlichen Umrandung (3) einen festen Abschnitt hat.

6. Tablett (1) gemäß einem der Ansprüche 1-4, wobei besagter mindestens ein Teilbereich (4a, 4b) der besagten kontinuierlichen Umrandung (3) einen hohlen Abschnitt und mehrere Rippen (6a, 6b) hat, die im Teil des Tabletts unterhalb der besagten geneigten oberen Oberfläche (16) angeordnet sind.

7. Tablett (1) gemäß einem der vorstehenden Ansprüche, wobei besagtes Tablett im Wesentlichen rechteckiger Form ist.

8. Tablett (1), gemäß einem der vorstehenden Ansprüche, wobei besagtes Tablett einen einzelnen Bereich umfasst, der geeignet ist, die Mahlzeiten aufzunehmen.

9. Tablett (1), gemäß einem der vorstehenden Ansprüche, das weiter mindestens einen Griffabschnitt (7a, 7b) der besagten kontinuierlichen Umrandung (3) umfasst, der mit einer ersten nach oben gerichteten Oberfläche und einer zweiten nach unten gerichteten Oberfläche ausgestattet ist, wobei die erste und die zweite Oberfläche des besagten Griffabschnitts (7a, 7b) derart geformt sind, dass sie vom Benutzer als Griff zum Halten des Tabletts verwendet werden können, und wobei besagte zweite nach unten gerichtete Oberfläche des mindestens einen Griffabschnitts (7a, 7b) mit einer Vielzahl von nebeneinander angeordneten Auskehlungen (8) ausgestattet ist, die nebeneinander platziert sind.

10. Tablett (1), gemäß einem der vorstehenden Ansprüche, das auf einem anderen Tablett (1) stapelbar ist, um einen kompakten, vertikalen und stabilen Stapel zu bilden.

11. System, das folgendes umfasst: a) ein Tablett (1), gemäß einem der vorstehenden Ansprüche 1-10 und b) einen Wagen (9), wobei das Tablett (1) einzusetzen ist, um Mahlzeiten zu transportieren und zu verteilen, wobei besagter Wagen (9) mit mindestens zwei Fächern (10a, 10b) ausgestattet ist, die von der Außenumgebung und voneinander getrennt und isoliert sind, da sie üblicherweise unterschiedliche Temperaturen aufweisen, wie zum Beispiel neutral, heiße und kalte Fächer und wobei der Wagen (9) ebenso mit einem Trennelement (11) zum Trennen besagter Fächer (10a, 10b) ausgestattet ist, wobei besagtes Trennelement (11) ein Isolierelement (12) umfasst, das mit Klappen oder Dichtungen ausgestattet ist, um besagte mindestens zwei Fächer (10a, 10b) abdichten zu können.

12. Verwendung eines Tabletts (1), gemäß einem der vorstehenden Ansprüche 1-10, um Mahlzeiten in einem Wagen (9) zu transportieren, wobei besagter Wagen (9) mit mindestens zwei Fächern (10a, 10b) ausgestattet ist, die von der Außenumgebung und voneinander getrennt und isoliert sind, da sie üblicherweise unterschiedliche Temperaturen aufweisen, wie zum Beispiel neutral, heiße und kalte Fächer und wobei der Wagen (9) ebenso mit einem Trennelement (11) ausgestattet ist, um besagte Fächer (10a, 10b) zu trennen, wobei besagtes Trennelement (11) ein Isolierelement (12) umfasst, das mit Klappen oder Verschlussdichtungen ausgestattet ist, um besagte mindestens zwei Fächer (10a, 10b) abzudichten.

13. Ein Verfahren zum Transportieren von Mahlzeiten in einem Wagen (9), das das Einsetzens des Tabletts (1), gemäß einem der vorstehenden Ansprüche 1-10, die Aufnahme einer Mahlzeit darauf, in einem Wagen (9) und den Transport umfasst, wobei besagter Wagen (9) mit mindestens zwei Fächern (10a, 10b) ausgestattet ist, die von der Außenumgebung und voneinander getrennt und isoliert sind, da sie üblicherweise unterschiedliche Temperaturen aufweisen, wie zum Beispiel neutral, heiße und kalte Fächer und wobei der Wagen (9) ebenso mit einem Trennelement (11) ausgestattet ist, um besagte Fächer (10a, 10b) zu trennen, wobei besagtes Trennelement (11) ein Isolierelement (12) umfasst, das mit Klappen oder Verschlussdichtungen ausgestattet ist, um besagte mindestens zwei Fächer (10a, 10b) abzudichten.

## Revendications

1. Plateau (1) pour la distribution de repas comprenant : a) une base d'appui (2) orientée vers le haut et destinée à recevoir lesdits repas, b) un dessous (5) orienté vers le bas et destiné à reposer sur une surface plane, et c) un bord périmétrique continu (3) disposé autour de ladite base d'appui (2) et en relief par rapport à celle-ci, dans lequel ledit bord (3) comprend une première partie (4a) située au centre le long d'un premier côté longitudinal (14a) du plateau (1) et une seconde partie (4b) située au centre le long d'un second côté longitudinal (14b) du plateau (1), à l'opposé dudit premier côté longitudinal (14a), au moins une desdites première et seconde parties (4a, 4b) dudit bord périmétrique continu en relief (3) présentant une base inférieure coplanaire coïncidant avec ledit dessous (5) du plateau (1) et une surface supérieure (16) inclinée de manière à relier l'extrémité surélevée de ladite au moins une partie (4a, 4b) dudit bord (3) à ladite base d'appui (2), **caractérisé en ce que** la hauteur de ladite au moins une partie (4a, 4b) dudit bord périmétrique continu (3) est inférieure à la partie restante dudit bord périmétrique continu en relief (3).

2. Plateau (1) selon la revendication 1, dans lequel ladite surface supérieure (16) de ladite au moins une partie (4a, 4b) dudit bord périmétrique continu (3) en relief est inclinée vers l'intérieur du plateau (1).

3. Plateau (1) selon l'une quelconque des revendications 1 à 2, dans lequel ladite au moins une partie (4a, 4b) dudit bord périmétrique continu (3) présente une section essentiellement triangulaire.

4. Plateau (1) selon l'une quelconque des revendications 1 à 2, dans lequel ladite au moins une partie (4a, 4b) dudit bord périmétrique continu (3) présente une section essentiellement trapézoïdale ou ovale.

5. Plateau (1) selon l'une quelconque des revendications 1 à 4, dans lequel ladite au moins une partie (4a, 4b) dudit bord périmétrique continu (3) présente une section solide.

6. Plateau (1) selon l'une quelconque des revendications 1 à 4, dans lequel ladite au moins une partie (4a, 4b) dudit bord périmétrique continu (3) présente une section creuse et une pluralité de rainures (6a, 6b) situées dans la partie du plateau en dessous de ladite surface supérieure inclinée (16).

7. Plateau (1) selon l'une quelconque des revendications précédentes, dans lequel ledit plateau a une forme essentiellement rectangulaire.

8. Plateau (1) selon l'une quelconque des revendications précédentes, dans lequel ledit plateau comprend une seule zone destinée à recevoir les repas.

9. Plateau (1) selon l'une quelconque des revendications précédentes comprenant également au moins une partie de préhension (7a, 7b) dudit bord périmétrique continu (3) pourvue d'une première surface orientée vers le haut et d'une seconde surface orientée vers le bas, dans lequel lesdites première et seconde surfaces de ladite partie de préhension (7a, 7b) ont une forme permettant à l'utilisateur de les utiliser comme poignée pour tenir le plateau, et dans lequel ladite seconde surface orientée vers le bas de ladite au moins une partie de préhension (7a, 7b) est pourvue d'une pluralité de renfoncements (8), placés les uns à côté des autres.

10. Plateau (1) selon l'une quelconque des revendications précédentes, pouvant être empilé sur un autre plateau (1) de manière ordonnée, de façon à créer une pile compacte, verticale et stable.

11. Système comprenant : a) un plateau (1) selon l'une quelconque des revendications précédentes 1 à 10 et b) un chariot (9) dans lequel le plateau (1) doit être inséré pour le transport et la distribution de repas, dans lequel ledit chariot (9) est pourvu d'au moins deux compartiments (10a, 10b) séparés et isolés de l'environnement externe et l'un de l'autre, généralement à des températures différentes, par exemple des compartiments neutres, chauds ou froids, et dans lequel le chariot (9) est également pourvu d'un élément de séparation (11) pour séparer lesdits compartiments (10a, 10b), dans lequel ledit élément de séparation (11) comprend un élément isolant (12) équipé d'obturateurs ou de joints d'étanchéité afin de pouvoir sceller lesdits au moins deux compartiments (10a, 10b).

12. Utilisation d'un plateau (1) selon l'une quelconque des revendications précédentes 1 à 10 pour le transport de repas dans un chariot (9), dans laquelle ledit chariot (9) est pourvu d'au moins deux compartiments (10a, 10b) séparés et isolés de l'environnement externe et l'un de l'autre, généralement à des températures différentes, par exemple des compartiments neutres, chauds ou froids, et dans laquelle le chariot (9) est également pourvu d'un élément de séparation (11) pour séparer lesdits compartiments (10a, 10b), dans lequel ledit élément de séparation (11) comprend un élément isolant (12) équipé d'obturateurs ou de joints de fermeture afin de pouvoir sceller lesdits au moins deux compartiments (10a, 10b).

13. Méthode de transport de repas dans un chariot (9), comprenant l'insertion du plateau (1) selon l'une quelconque des revendications précédentes 1 à 10, en prenant le repas dessus, dans un chariot (9), et le transport, dans laquelle ledit chariot (9) est pourvu d'au moins deux compartiments (10a, 10b) séparés et isolés de l'environnement externe et l'un de l'autre, généralement à des températures différentes, par exemple des compartiments neutres, chauds ou froids, et dans laquelle le chariot (9) est également pourvu d'un élément de séparation (11) pour séparer lesdits compartiments (10a, 10b), dans lequel ledit élément de séparation (11) comprend un élément isolant (12) équipé d'obturateurs ou de joints de fermeture afin de pouvoir sceller lesdits au moins deux compartiments (10a, 10b).
